# EUROPEAN PATENT SPECIFICATION

(11) **EP 0 988 327 B1**
(45) Date of publication and mention of the grant of the patent: **14.11.2001**
(21) Application number: 98928945.9
(22) Date of filing: 09.06.1998
(51) Int. Cl.: C08F 4/70, C08F 10/00

(54) **POLYMERIZATION OF OLEFINS**
OLEFINPOLYMERISATION
POLYMERISATION D'OLEFINES

(30) Priority: 09.06.1997 US 49232 P; 30.03.1998 US 79973 P
(43) Date of publication of application: 29.03.2000
(73) Proprietor: E.I. DU PONT DE NEMOURS AND COMPANY, Wilmington Delaware 19898 (US)
(72) Inventor: BENNETT, Alison, Margaret, Anne, Wilmington, DE 19803 (US); MCLAIN, Stephen, James, Wilmington, DE 19803 (US)
(74) Representative: Carpmael, John William Maurice
(86) International application number: US9811904
(87) International publication number: WO9856832

(56) References cited:
- WO-A-96/23010
- CHEMICAL ABSTRACTS, vol. 128, no. 2, 12 January 1998 Columbus, Ohio, US; abstract no. 13523, SUGIMURA, KENJI ET AL: "Catalysts and polymerization of olefins using the same" XP002077300 & JP 09 278822 A (MITSUI PETROCHEMICAL INDUSTRIES, LTD., JAPAN)
- CHEMICAL ABSTRACTS, vol. 127, no. 26, 29 December 1997 Columbus, Ohio, US; abstract no. 359237, SUGIMURA, KENJI ET AL: "Olefin polymerization catalysts and (co)polymerization of olefins therewith" XP002077301 & JP 09 272713 A (MITSUI PETROCHEMICAL INDUSTRIES, LTD., JAPAN)

## Description

### FIELD OF THE INVENTION

Polymerization processes involving polymerization catalysts, containing transition metals complexed to selected ligands, which are supported and/or preformed are described. In some cases this allows the use of more economical polymerization processes, such as gas phase or liquid slurry polymerizations.

### TECHNICAL BACKGROUND

Polymerization of olefins such as ethylene and/or propylene is a very important industrial process, being run on a huge worldwide scale. An important factor in that production is the polymerization process used, which is important in determining the properties of the polymer produced, and also its cost.

In some polymerization processes the polymerization catalyst may be prepared in situ, or it may be fully or partially prepared ahead of time. The catalyst or its components may be added by themselves to the polymerization or may by added "attached" to solid materials (often called supports). Other variations are possible. What type of polymerization process may be used is determined in part by the nature of the catalyst system used.

Thus the form of the catalyst system is important. For instance, in gas phase or liquid slurry polymerization systems the catalyst is often preformed, usually on a solid support, so that in the polymerization solid granules of "catalyst" and later polyolefin are present, thereby reducing fouling of the reactor. Thus new forms of polymerization catalysts for olefins are constantly being sought.

A recent development in olefin polymerizations has been the discovery that selected complexes of transition metals, especially late transition metals, catalyze the polymerization of olefins, see for instance World Patent Applications 96/23010 and 97/02298. It has been discovered that these catalyst systems can be converted to and used in various forms.

### SUMMARY OF THE INVENTION

This invention concerns a catalyst for the polymerization of olefins made by a process, comprising,
(a) contacting, at a temperature of about -100°C to about +200°C:
   a first compound W, which is a neutral Lewis acid capable of abstracting either Q⁻ or S⁻ to form WQ⁻ or WS⁻, provided that the anion formed is a weakly coordinating anion; or a cationic Lewis or Bronsted acid whose counterion is a weakly coordinating anion;
   a second compound of the formula 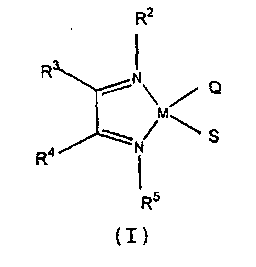 and a first polymerizable olefin wherein:
      M is Ni or Pd;
      R² and R⁵ are each independently hydrocarbyl or substituted hydrocarbyl, provided that the carbon atom bound to the imino nitrogen atom has at least two carbon atoms bound to it;
      R³ and R⁴ are each independently hydrogen, hydrocarbyl, substituted hydrocarbyl, or R³ and R⁴ taken together are hydrocarbylene or substituted hydrocarbylene to form a ring;
      Q is alkyl, hydride, chloride, iodide, or bromide; and
      S is alkyl, hydride, chloride, iodide, or bromide; and
(b) isolating a polymer formed in (a) without exposing said polymer to a substance or condition which would deactivate active polymerization sites present in or on said polymer.

The invention also concerns the process for the polymerization of olefins, comprising the step of contacting a catalyst according to the present invention with a second polymerizable olefin at a temperature of -100°C to +200°C.

### DETAILS OF THE INVENTION

In the polymerization processes and catalyst compositions described herein certain groups may be present. By hydrocarbyl is meant a univalent radical containing only carbon and hydrogen. By saturated hydrocarbyl is meant a univalent radical which contains only carbon and hydrogen, and contains no carbon-carbon double bonds, triple bonds and aromatic groups. By substituted hydrocarbyl herein is meant a hydrocarbyl group which contains one or more (types of) substitutents that does not interfere with the operation of the polymerization catalyst system. Suitable substituents include halo, ester, keto (oxo), amino, imino, carboxyl, phosphite, phosphonite, phosphine, phosphinite, thioether, amide, nitrile, and ether. Preferred substituents are halo, ester, amino, imino, carboxyl, phosphite, phosphonite, phosphine, phosphinite, thioether, and amide. By (substituted) hydrocarbylene is meant a group analogous to hydrocarbyl, except the radical is divalent. By benzyl is meant the C₆H₅CH₂- radical, and substituted benzyl is a radical in which one or more of the hydrogen atoms is replaced by a substituent group (which may include hydrocarbyl). By an aryl moiety is meant a univalent group whose free valence is to a carbon atom of an aromatic ring. The aryl moiety may contain one or more aromatic rings and may be substituted by inert groups. By phenyl is meant the C₆H₅- radical, and a phenyl moiety or substituted phenyl is a radical in which one or more of the hydrogen atoms is replaced by a substituent group (which may include hydrocarbyl). Preferred substituents for substituted benzyl and phenyl include those listed above for substituted hydrocarbyl, plus hydrocarbyl. If not otherwise stated, hydrocarbyl, substituted hydrocarbyl and all other groups containing carbon atoms, such as alkyl, preferably contain 1 to 20 carbon atoms.

Noncoordinating ions are mentioned and useful herein. Such anions are well known to the artisan, see for instance W. Beck., et al., Chem. Rev., vol. 88, p. 1405-1421 (1988), and S. H. Strauss, Chem. Rev., vol. 93, p. 927-942 (1993), both of which are hereby included by reference. Relative coordinating abilities of such noncoordinating anions are described in these references, Beck at p. 1411, and Strauss at p. 932, Table III. Useful noncoordinating anions include SbF₆⁻, BAF, PF₆⁻, or BF₄⁻, wherein BAF is tetrakis[3,5-bis(trifluoromethyl)phenyl]borate.

A neutral Lewis acid or a cationic Lewis or Bronsted acid whose counterion is a weakly coordinating anion is also present as part of the catalyst system. By a "neutral Lewis acid" is meant a compound which is a Lewis acid capable of abstracting Q⁻ or S⁻ (or optionally both or either, since they may be the same) from (I) to form a weakly coordinating anion. The neutral Lewis acid is originally uncharged (i.e., not ionic). Suitable neutral Lewis acids include SbF₅, Ar₃B (wherein Ar is aryl), and BF₃. By a cationic Lewis acid is meant a cation with a positive charge such as Ag⁺, H⁺, and Na⁺.

In those instances in which (I) (and similar catalysts which require the presence of a neutral Lewis acid or a cationic Lewis or Bronsted acid), does not contain an alkyl or hydride group already bonded to the metal (i.e., neither Q or S is alkyl or hydride), the neutral Lewis acid or a cationic Lewis or Bronsted acid also alkylates or adds a hydride to the metal, i.e., causes an alkyl group or hydride to become bonded to the metal atom, or a separate (from W) compound is added to add the alkyl or hydride group.

A preferred neutral Lewis acid, which can alkylate the metal, is a selected alkyl aluminum compound, such as R⁹₃Al, R⁹₂AlCl, R⁹AlCl₂, R⁹₃Al₂Cl₃ and "R⁹AlO" (alkylaluminoxanes), wherein R⁹ is alkyl containing 1 to 25 carbon atoms, preferably 1 to 4 carbon atoms. Suitable alkyl aluminum compounds include methylaluminoxane (which is an oligomer with the general formula [MeAlO]ₙ), (C₂H₅)₂AlCl, C₂H₅AlCl₂, (C₂H₅)₃Al₂Cl₃, and [(CH₃)₂CHCH₂]₃Al, and methylaluminoxane is a preferred alkylaluminum compound. Metal hydrides such as NaBH₄ may be used to bond hydride groups to the metal M.

In compounds such as (I) an α-diimine of the formula 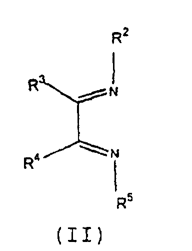 may be present as a ligand. In all cases herein where (II) appears, including as a ligand, it is preferred that R² and R⁵ are each independently hydrocarbyl provided that the carbon atom bound to the imino nitrogen atom has at least two carbon atoms bound to it; and R³ and R⁴ are each independently hydrogen, hydrocarbyl, or R³ and R⁴ taken together are hydrocarbylene to form a ring. Some useful combinations and/or individual groupings for R², R³, R⁴ and R⁵ are shown in Table I.

**Table 1***

| R² | R³ | R⁴ | R⁵ |
|---|---|---|---|
| 2,6-i-PrPh | Me | Me | 2,6-i-PrPh |
| 2,6-i-PrPh | H | H | 2,6-i-PrPh |
| 2,6-MePh | H | H | 2,6-MePh |
| 2,6-MePh | Me | Me | 2,6-MePh |
| 2,6-i-PrPh | Me | Me | 2,6-i-PrPh |
| 2,6-i-PrPh | Me | Me | 2,6-i-PrPh |
| 2,6-i-PrPh | Me | Me | 2,6-i-PrPh |
| 2,6-i-PrPh | H | H | 2,6-i-PrPh |
| 2,4,6-MePh | Me | Me | 2,4,6-MePh |
| 2,6-i-PrPh | An | An | 2,6-i-PrPh |
| 2,6-i-PrPh | Me | Me | 2,6-i-PrPh |
| Ph | Me | Me | Ph |
| 2,6-EtPh | Me | Me | 2,6-EtPh |
| 2,6-EtPh | Me | Me | 2,6-EtPh |
| 2-t-BuPh | Me | Me | 2-t-BuPh |
| 1-Np | Me | Me | 1-Np |
| Ph₂CH | H | H | Ph₂CH |
| 2-PhPh | Me | Me | 2-PhPh |
| Ph | a | a | Ph |
| Ph | Me | Me | Ph |
| Ph | Ph | Ph | Ph |
| Ph₂CH | H | H | Ph₂CH |
| Ph₂CH | H | H | Ph₂CH |
| 2,4,6-MePh | An | An | 2,4,6-MePh |
| 2,4,6-MePh | Ph | Ph | 2,4,6-MePh |
| 2,4,6-MePh | H | H | 2,4,6-MePh |
| 2,4,6-MePh | Et | Et | 2,4,6-MePh |
| 4-Br-2,6-MePh | Me | Me | 4-Br-2,6-MePh |
| 2-Cl-6-MePh | Me | Me | 2-Cl-6-MePh |
| 2-Me-6-iPrPh | H | Me | 2-Me-6-iPrPh |
| 2-Me-6-iPrPh | An | An | 2-Me-6-iPrPh |
| 2-Cl-6-MePh | An | An | 2-Cl-6-MePh |

| | | | |
|---|---|---|---|
| ^{a} -CMe₂CH₂CMe₂-. * In Table 1 and otherwise herein the following abbreviations are used: Me=methyl; Et=ethyl; Cl=chloro; Br=bromo; i-Pr=isopropyl; Ph=phenyl; and An=1,8-naphthylylene, | | | |

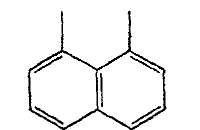

To indicate substitution on a phenyl ring, the nomenclature is abbreviated, the number of ring positions indicating how many of the substituents are on the ring. For instance, 4-Br-2,6-MePh indicates 4-bromo-2,6-dimethylphenyl.

Compounds other than (II) may be used as ligands for the Ni atom in (I). Compounds such as Ar¹ Qn (III); R⁸R¹⁰N-CR²⁰R²¹(CR⁶R⁷)ₘ-NR⁸R¹⁰ (IV); 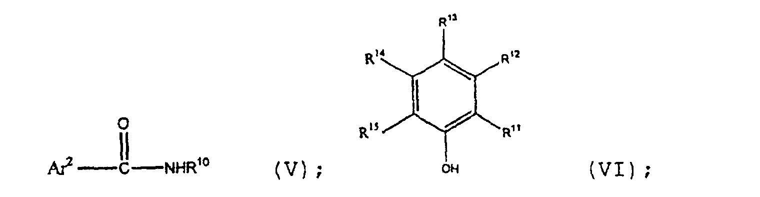 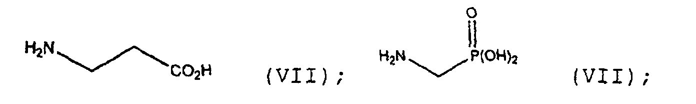 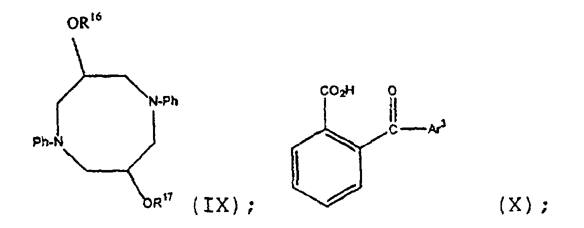 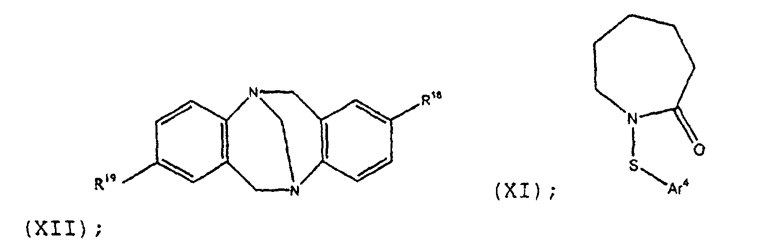 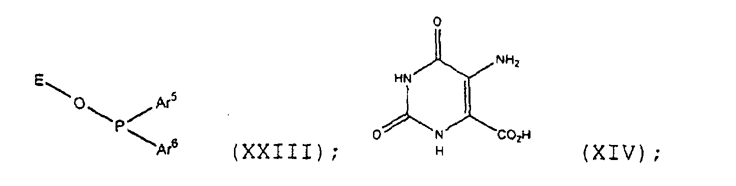 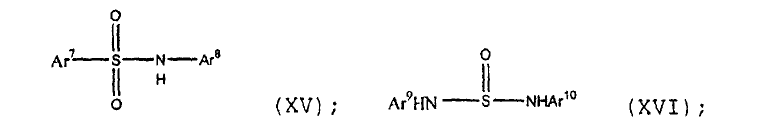 R²²R²³R²⁴P (XIX) ; 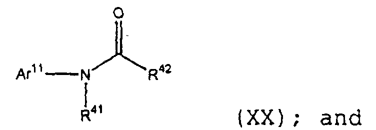 R⁸S-CR⁴R⁵(CR⁶R⁷)ₘ-SR⁸ (XXI) ;
wherein:
Ar¹ is an aromatic moiety with n free valencies, or diphenylmethyl;
each Q is -NR²⁵R⁴³ or -CR⁹=NR²⁶;
n is 1 or 2;
E is 2-thienyl or 2-furyl;
each R²⁵ is independently hydrogen, benzyl, substituted benzyl, phenyl or substituted phenyl;
each R⁹ is independently hydrogen or hydrocarbyl; and
each R²⁶ is independently a monovalent aromatic moiety;
m is 1, 2 or 3;
R⁴³ is hydrogen or alkyl;
each R²⁰, R²¹, R⁶, and R⁷ is independently hydrogen, hydrocarbyl or substituted hydrocarbyl;
each R⁸ is independently hydrocarbyl or substituted hydrocarbyl containing 2 or more carbon atoms;
each R¹⁰ is independently hydrogen, hydrocarbyl or substituted hydrocarbyl;
Ar² is an aryl moiety;
R¹², R¹³, and R¹⁴ are each independently hydrogen, hydrocarbyl, substituted hydrocarbyl or an inert functional group;
R¹¹ and R¹⁵ are each independently hydrocarbyl, substituted hydrocarbyl or an inert functional group whose Eₛ is about -0.4 or less;
each R¹⁶ and R¹⁷ is independently hydrogen or acyl containing 1 to 20 carbon atoms;
Ar³ is an aryl moiety;
R¹⁸ and R¹⁹ are each independently hydrogen or hydrocarbyl;
Ar⁴ is an aryl moiety;
Ar²¹ and Ar⁶ are each independently hydrocarbyl;
Ar⁷ and Ar⁸ are each independently an aryl moiety;
Ar⁹ and Ar¹⁰ are each independently an aryl moiety or -CO₂R²⁵, wherein R²⁵ is alkyl containing 1 to 20 carbon atoms;
Ar¹¹ is an aryl moiety;
R⁴¹ is hydrogen or hydrocarbyl;
R⁴² is hydrocarbyl or -C(O)-NR⁴¹-Ar¹¹;
R⁴⁴ is aryl;
R²² and R²³ are each independently phenyl groups substituted by one or more alkoxy groups, each alkoxy group containing 1 to 20 carbon atoms; and
R²⁴ is alkyl containing 1 to 20 carbon atoms, or an aryl moiety.

In the compounds listed immediately above, Eₛ refers to the steric effect of a group. The steric effect of various groupings has been quantified by a parameter called Es, see R. W. Taft, Jr., J. Am. Chem. Soc., vol. 74, p. 3120-3128 (1952), and M.S. Newman, Steric Effects in Organic Chemistry, John Wiley & Sons, New York, 1956, p. 598-603. For the purposes herein, the Eₛ values are those described in these publications. If the value for Eₛ for any particular group is not known, it can be determined by methods described in these publications. For the purposes herein, the value of hydrogen is defined to be the same as for methyl. It is preferred that the total Eₛ value for the ortho (or other substituents closely adjacent to the -OH group) substitutents in the ring be about -1.5 or less, more preferably about -3.0 or less. Thus in a compound such as 2,4,6-tri-t-butylphenol only the Eₛ values for the 2 and 6 substituted t-butyl groups would be applicable.

In addition to the ligands listed above which may be used in compounds similar to (I), metals other than Ni may be used. Such metals include Ti, Zr, Sc, V, Cr, any of the rare earth metals, Fe, Co and Pd. In cases in which the metal is in other than a +2 oxidation state, the appropriate number of groups Q and S are present to ensure that (I) is a neutral species. The preparations of the various ligands and the compound (I) with its various combinations are found in World Patent Applications 96/23010 and 97/02298, both of which are hereby included by reference. In (I) it is preferred that M is Ni.

The temperature at which the catalyst preparation and the polymerization are carried out, steps (a) and (c) respectively, is about -100°C to about +200°C, preferably about -20°C to about +80°C. The pressures at which either or both steps are carried out with a gaseous olefin are not critical, atmospheric pressure to about 275 MPa, or more, being a suitable range. With a liquid monomer the monomer may be used neat or diluted with another liquid (solvent) for the monomer. The ratio of W:(I) is preferably about 1 or more, more preferably about 10 or more when only W (no other Lewis acid catalyst) is present. More details on these ratios may be found in World Patent Applications 96/23010 and 97/02298.

Although the first [(a)] step of the processes herein may be done in the liquid or gas phases, it is preferred that it be done in the liquid phase. If the monomer (olefin) is a liquid it may be done in the neat olefin, or the olefin may be diluted with another liquid, preferably a solvent. If the monomer is a gas, a material that is a liquid at the process conditions (temperature and pressure) may be used. It is preferred that the liquid present, whatever it is, dissolve to at least some extent all of the reactants present, i.e., (I), W, and the olefin. It is not necessarily preferred that the product polymer be soluble in the liquid medium (see below).

The polymer formed in (a) can act as the support for the active polymeric polymerization catalyst and other materials which may support the polymer formed in (a), such as alumina, silica (including partially dehydrated silica gels), a clay, a zeolite, MgO and TiO₂, may also be present. In many cases, the polymer formed in (a) will "adhere" to or encapsulate any solid particulate support material present, and it is preferred that the polymer just fill any pores or irregularities in the solid support surface.

The polymer formed in (a) and/or (c) may be a homopolymer or a copolymer, and/or the polymer(s) formed in (a) and (c) may be the same or different. Monomers useful in (a) and (c) include ethylene, propylene, other α-olefins of the formula R⁵⁰CH=CH₂, wherein R⁵⁰ is n-alkyl containing 2 to about 20 carbon atoms, cyclopentene, norbornene, substituted cyclopentenes, styrene and substituted styrenes, and substituted norbornenes. Preferred monomers are ethylene, propylene and cyclopentene, and cyclopentene is more preferred. When cyclopentene is polymerized in (a), it is preferred that the liquid medium be cyclopentene (and any other liquid reactants).

The polymer which is formed in (a), which is an active olefin polymerization catalyst, may be isolated in any number of ways, so long as it is not exposed to substances or conditions that will cause its catalytic polymerization activity to be destroyed, and preferably not substantially decreased. Exposure to one or more of water, oxygen and alcohols, as well as elevated temperatures, may cause the catalytic activity to decrease. However, storage in a dry box of the active polymeric polymerization catalysts described in the Examples at -30°C for one week does not seem to substantially reduce catalytic activity. If the catalytic activity is decreased it may sometimes be at least partially restored by adding W to the polymeric polymerization catalyst just before or simultaneous with adding the olefin to be polymerized in step (c).

The polymeric polymerization catalyst produced in (a) may be isolated by removing the liquid(s) present to isolate the polymer. These liquids may be removed simply applying a vacuum (and heat if needed, but see below) to the system. If the polymeric polymerization catalyst is not soluble in the liquid, the liquid may be decanted from the polymer, or the polymer (if a "solid") may be filtered from the liquid. If the polymer in (a) is made in a gas phase polymerization, it need merely be removed from the gaseous olefin.

It is preferred that when used in (c) the polymeric polymerization catalyst be in particulate form, more preferably a relatively small particulate size. A useful particle size (particularly for gas phase or liquid slurry polymerization) is about 20-50 µm, preferably about 20 µm, and an approximately spherical shape is desirable. This is most easily achieved when the polymer formed in (a) is below its glass transition temperature and/or its melting point while it is formed, and preferably maintained below that temperature before being used as a polymerization catalyst. If this is the case, and the polymerization in (a) is carried out in the liquid or gaseous phase, the polymeric polymerization catalyst will often be obtained as a particulate solid.

Since the "desired" polymer is the polymer ultimately produced in (c), it is obvious that the proportion of polymer produced in (a) be relatively small compared to the total amount of polymer produced in (a) and (c). Therefore, it is preferred to produce relatively little polymer in (a), consistent with obtaining a polymeric polymerization catalyst which may be conveniently handled. It is also preferred that the polymer made in (a) fracture during or after polymerization in (c), so that only very small particles of the polymer produced in (a) be present in the final polymer matrix.

Active polymerization catalysts, which are capable of starting the polymerization in step (a), may also be made by other methods, for instance by in situ formation of the metal complex of (II) (or other ligands) while forming an active catalyst. Such methods of forming active catalysts with the ligands and metals described herein can be found in World Patent Applications 96/23010 and 97/02298, both of which are hereby included by reference. Likewise, the polymerizations carried out in step (c) herein to produce the "desired" products may also be carried out as described in these patent applications. These applications also describe what monomers and monomer combinations can be used with which catalysts.

A particulate active polymerization catalyst may also be prepared by coating or otherwise adhering (depending on the support used, the "coating" may be due to absorption, adsorption, or actual chemical bonding between the compound and the solid support) a nickel or other transition metal mentioned above, which is a complex of one of the ligands mentioned above, to a solid support such as alumina or silica (or any of the others mentioned above), or a polymer such as polyethylene. This type of catalyst may be prepared simply be immersing the support in a solution of the compound and evaporating the solvent This nickel (or other transition metal) compound by itself (without any cocatalysts) is able to polymerize olefins. Such compounds, for example certain π-allyl complexes, and their preparation are described in World Patent Applications 96/23010 and 97/02298.

Alternatively, compounds such as (I) and other types of compounds (see World Patent Applications 96/23010 and 97/02298) which form active polymerization catalysts with a cocatalyst such as W [which may be an alkyl aluminum compound or another Lewis acid such as B(C₆F₅)₃] may be coated onto a solid support (and may chemically react with that support to bond it to that support) such as those mentioned above, then placed in the presence of the olefin(s) to be polymerized and the cocatalysts such as an alkyl aluminum compound, and the polymerization started.

Conversely, the compound W may be coated (often it reacts with the support) on a support and then (I) or a similar compound may be added simultaneous with or before the addition of the olefin to be polymerized. This also results in an active polymerization system. If there is another component to the polymerization system such as another Lewis acid such as tris(pentafluorophneyl)borane, it could be added (for example to the solvent to which the support, (I) and W have already been added) at this point.

Another catalyst which may be used in the polymerization systems described herein are Ni catalysts for the polymerization of norbornene and substituted norbornenes, see for instance World Patent Application 95/14048, which is hereby included by reference. In these catalysts a soluble Ni salt as Ni(acetylacetonate)₂ and methylaluminoxane are reacted to form an active catalyst species which polymerizes norbornenes. The polynorbornene formed may itself act as a support or the polymerization may be done in the presence of another solid support such as silica to form a polymeric polymerization catalyst.

For any of the above methods, a support may be chosen such that it "supplies" the relatively noncoordinating anion X. Such a support can be a clay such as montmorillonite.

The above polymerization catalysts, no matter how made, are useful in liquid media, in suspension or solution polymerization, and especially useful in so-called gas phase or liquid slurry olefin polymerizations. It may also be useful when carrying out polymerizations in the gas phase to have inert particulate solids present to absorb the heat of polymerization. They may be used in batch, semi-batch and continuous polymerization processes.

In the Examples, certain α-diimine ligands are used, and they are designated by letter. These ligands are listed below:

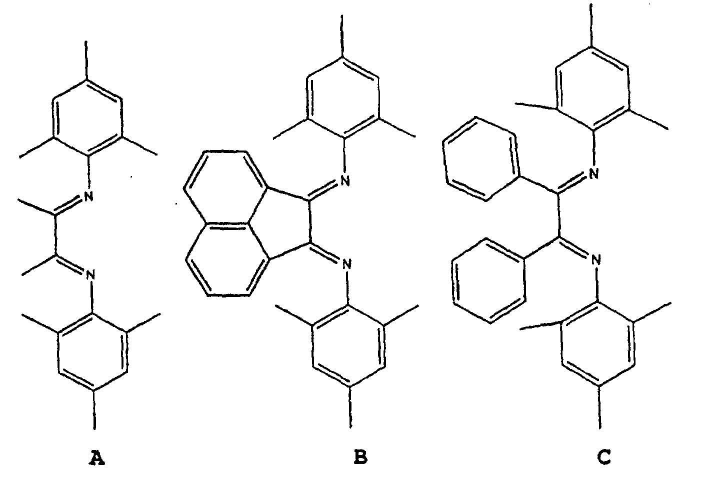

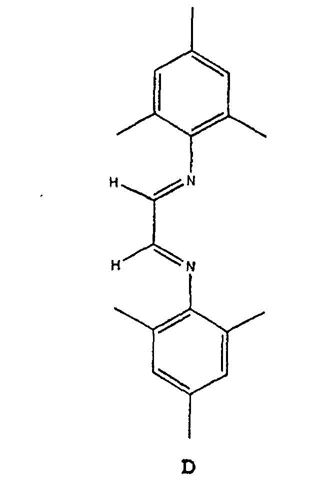

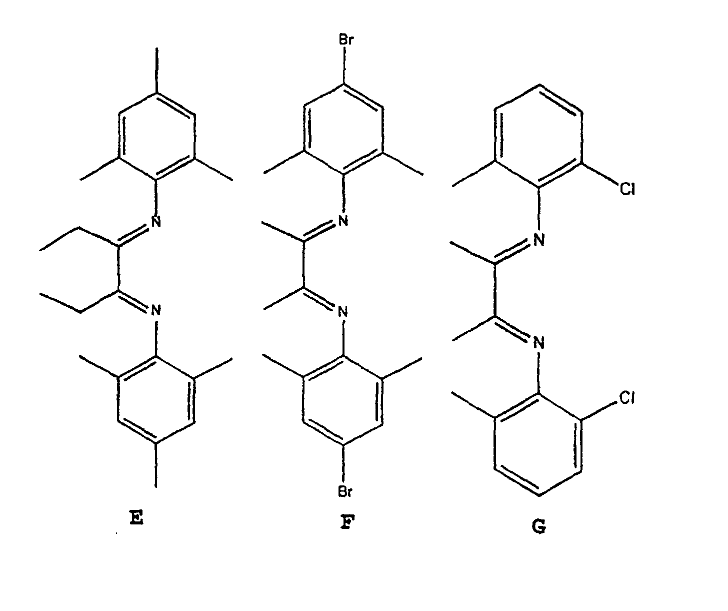

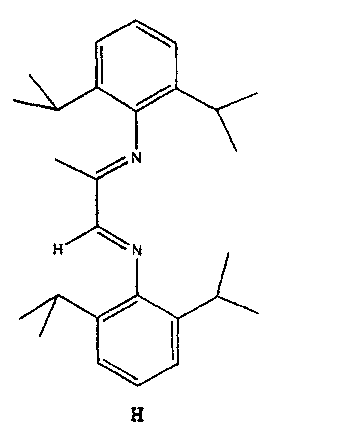

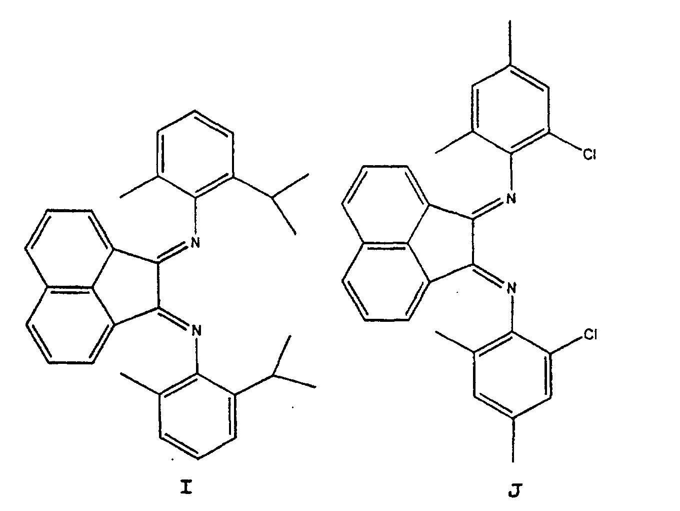

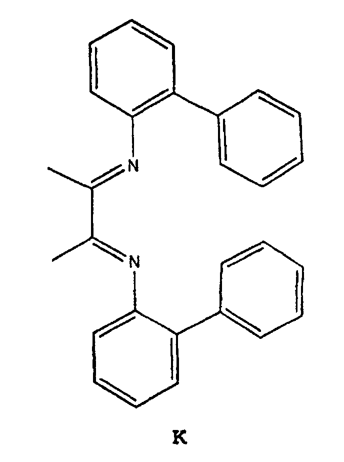

In the Examples, the following abbreviations are used:
ICP - Inductively Coupled Plasma spectroscopy
MAO - poly(methylaluminoxane)
TO - turnovers, moles of olefin polymerized per mole of transition metal compound.
PMAO - see MAO

In the Examples branching is expressed as number of methyl groups per 1000 total (including those in branches) methylene carbon atoms in the polymer. It is not corrected for end groups.

In Table 2, 3 and 4 the yields reported are the total amounts of solids obtained, including any catalyst residues (and polymer from the catalyst) present in the product.

### Examples 1-22.

### Supported Catalyst Preparation.

The following general procedure was used to prepare the polycyclopentene supported catalysts of these Examples:

Inside a nitrogen filled drybox, 0.04 mmol of catalyst complex (I) [(α-diimine)NiBr₂] was added to 5 ml dry cyclopentene (when MAO was used as cocatalyst, 2 ml dry toluene was added as well). The reaction mixture was chilled to -30°C. The desired cocatalyst was added and the solution allowed to come to room temperature while being shaken vigorously. The reaction mixture was shaken for 5 h after which it was filtered under nitrogen, washed once with toluene and then three times with pentane and dried under vacuum. The isolated supported catalyst was stored at -30°C in the drybox. The details of each catalyst preparation are outlined in Table 2.

**Table 2**

| **Ex. No.** | **Diimine ligand** | **Cocatalyst** | **Equiv. of Cocatalyst**** | **Yield (g)** | **TO** | **%Al (ICP)** | **%Ni (ICP)** |
|---|---|---|---|---|---|---|---|
| 1 | A | MAO* | 75 | 0.340 | 125 | 9.04 | 0.36 |
| 2 | A | B(C₆F₅)₃, AlEt₃ | 3,3 | 0.495 | 182 | 0.33 | 0.34 |
| 3 | B | MAO | 75 | 0.638 | 234 | 4.14 | 0.16 |
| 4 | B | B(C₆F₅)₃, AlEt₃ | 3,3 | 0.817 | 300 | 0.22 | 0.19 |
| 5 | C | MAO | 75 | 0.25 | 92 | 9.9 | 0.34 |
| 6 | C | B(C₆F₅)₃, AlEt₃ | 3,3 | 0.297 | 109 | 0.39 | 0.37 |
| 7 | D | MAO | 75 | 0.531 | 195 | 4.68 | 0.29 |
| 8 | D | B(C₆F₅)₃, AlEt₃ | 3,3 | 0.135 | 50 | 0.35 | 1.42 |
| 9 | E | MAO | 75 | 0.379 | 140 | 6.78 | 0.3 |
| 10 | E | B(C₆F₅)₃, AlEt₃ | 3,3 | 0.519 | 190 | 0.26 | 0.32 |
| 11 | F | MAO | 75 | 0.399 | 146 | 8.36 | 0.35 |
| 12 | F | B(C₆F₅)₃, AlEt₃ | 3,3 | 0.468 | 171 | 0.28 | 0.29 |
| 13 | G | MAO | 75 | 0.638 | 234 | 4.43 | 0.16 |
| 14 | G | B(C₆F₅)₃, AlEt₃ | 3,3 | 1.361 | 500 | 0.14 | 0.13 |
| 15 | H | MAO | 75 | 0.349 | 128 | 9.59 | 0.41 |
| 16 | H | B(C₆F₅)₃, AlEt₃ | 3,3 | 0.322 | 118 | 0.38 | 0.52 |
| 17 | I | MAO | 75 | 0.51 | 187 | 5.59 | 0.21 |
| 18 | I | B(C₆F₅)₃, AlEt₃ | 3,3 | 1.283 | 470 | 0.13 | 0.16 |
| 19 | J | MAO | 75 | 0.463 | 170 | 5.31 | 0.14 |
| 20 | J | B(C₆F₅)₃, AlEt₃ | 3,3 | 1,393 | 511 | 0.10 | 0.13 |
| 21 | K | MAO | 75 | 1.182 | 433 | 2.10 | 0.068 |
| 22 | K | B(C₆F₅)₃, AlEt₃ | 3,3 | 1.451 | 532 | 0.086 | 0.07 |

| | | | | | | | |
|---|---|---|---|---|---|---|---|
| *PMAO, Akzo 9.5wt% Al in toluene | | | | | | | |
| ** Equivalents elative to Ni added | | | | | | | |

### Examples 23-43

### Ethylene Polymerization at 35-70 kPa Ethylene Pressure

The following general procedure was used to test the catalysts from Examples 1-22 for ethylene polymerization activity at 35-70 kPa ethylene pressure:

The catalyst was weighed (within 48 h of being prepared) into a Schlenk flask in a nitrogen filled drybox. Dry pentane (10 ml) was added. The flask was stoppered, removed from the dry box and flushed with ethylene for 1 minute with stirring before placing under 35-70 kPa ethylene pressure. The polymerization was allowed to run for 16 h after which time the reaction was quenched by addition of MeOH/10%HCl and the resulting solid polymer filtered, washed well with MeOH, acetone and then dried under vacuum. The degree of branching of the resulting polyethylene was characterized by proton NMR. The polymerization results are outlined in Table 3.

**Table 3**

| **Ex. No.** | **Catalyst Ex. No.** | **Mass Cat. (g)** | **mmol Ni** | **Yield (g PE)** | **TO** | **Branching CH**_{**3**} **/10**^{**3**} **CH**_{**2**} |
|---|---|---|---|---|---|---|
| 23 | 1 | 0.08 | 0.00491 | 1.01 | 7346 | 122 |
| 24 | 2 | 0.100 | 0.00579 | 0.06 | 369 | 112 |
| 25 | 3 | 0.150 | 0.00409 | 1.70 | 13622 | 69 |
| 26 | 4 | 0.200 | 0.00647 | 0.16 | 883 | 62 |
| 27 | 5 | 0.080 | 0.00463 | 0.87 | 6710 | 87 |
| 28 | 7 | 0.120 | 0.00593 | 0.42 | 2529 | 21 |
| 29 | 8 | 0.050 | 0.01209 | 0.07 | 206 | 37 |
| 30 | 9 | 0.090 | 0.0046 | 0.48 | 3726 | 77 |
| 31 | 10 | 0.12 | 0.00654 | 0.19 | 1037 | 79 |
| 32 | 11 | 0.10 | 0.00596 | 1.92 | 11505 | 83 |
| 33 | 12 | 0.11 | 0.00543 | 0.17 | 1118 | 62 |
| 34 | 13 | 0.15 | 0.00409 | 1.71 | 14931 | 89 |
| 35 | 14 | 0.25 | 0.00553 | 0.11 | 710 | 49 |
| 36 | 15 | 0.08 | 0.00559 | 1.50 | 9583 | |
| 37 | 16 | 0.08 | 0.00709 | 0.38 | 1914 | |
| 38 | 17 | 0.12 | 0.00429 | 1.61 | 13403 | |
| 39 | 18 | 0.25 | 0.00681 | 0.43 | 2255 | |
| 40 | 19 | 0.11 | 0.00262 | 1.58 | 21537 | |
| 41 | 20 | 0.25 | 0.00553 | 0.28 | 1808 | |
| 42 | 21 | 0.25 | 0.00289 | 1.15 | 14211 | |
| 43 | 22 | 0.25 | 0.0030 | 0.04 | 476 | |

### Examples 44-58

### Ethylene Polymerization at 580 kPa Ethylene Pressure

The following general procedure was used to test the catalysts prepared in Examples 1-22 for ethylene polymerization activity at 580 kPa ethylene pressure:

The catalyst was weighed (within 4 h after preparation) into a glass insert inside a nitrogen filled glove box. Dry benzene, a liquid non-solvent, was added to act as a heat transfer medium and the insert placed in a freezer at -30°C for 30 min to ensure the benzene was well frozen. The cold insert was sealed, removed from the box and placed under 580 kPa ethylene pressure. It was allowed to come to room temperature and was shaken for 18 h. The resulting polymer was isolated by filtration, washed with MeOH then acetone and dried under vacuum. The polymerization results are outlined in Table 4.

**Table 4**

| **Ex. No.** | **Catalyst Ex. No.** | **Mass Cat. (g)** | **mmol Ni** | **Yield (g PE)** | **TO** | **Branching CH**_{**3**} **/10**^{**3**} **CH**_{**2**} |
|---|---|---|---|---|---|---|
| 44 | 1 | 0.08 | 0.00491 | 0.17 | 1236 | 7 |
| 45 | 3 | 0.15 | 0.00409 | 1.56 | 13622 | 5 |
| 46 | 4 | 0.20 | 0.00647 | 0.39 | 2152 | 27 |
| 47 | 5 | 0.08 | 0.00463 | 2.34 | 18050 | |
| 48 | 7 | 0.12 | 0.00593 | 0.43 | 2590 | 5 |
| 49 | 9 | 0.09 | 0.0046 | 0.24 | 1863 | 3 |
| 50 | 11 | 0.10 | 0.00596 | 1.15 | 6891 | 6 |
| 51 | 12 | 0.11 | 0.00543 | 0.06 | 460 | 18 |
| 52 | 13 | 0.15 | 0.00409 | 0.20 | 1746 | 6 |
| 53 | 15 | 0.08 | 0.00559 | 0.63 | 4025 | |
| 54 | 16 | 0.08 | 0.00709 | 0.13 | 654 | |
| 55 | 17 | 0,12 | 0.00429 | 1.59 | 13236 | |
| 56 | 18 | 0.25 | 0.00681 | 0.23 | 1206 | |
| 57 | 19 | 0.11 | 0.00262 | 1.44 | 19629 | |
| 58 | 21 | 0.25 | 0.00289 | 0.61 | 7538 | |

### Example 59

### Polymerization of Ethylene using Various Diluents.

The supported catalyst was prepared in a nitrogen filled glove box by adding 0.16 mmol of the nickel dibromide complex of ligand B to 20 ml dry cyclopentene and 8 ml dry toluene. The mixture was chilled to -30°C and MAO (5.2 ml) added. The catalyst solution was allowed to warm to room temperature and stirred for 5 h after which the solid supported catalyst was filtered off, washed once with toluene and three times with pentane and dried under vacuum. The solid was stored at -30°C. Yield = 3.55g. %Al (ICP) = 4.43%, %Ni (ICP) = 0.17%.

A 0.20 g portion of the catalyst (0.00579 mmol Ni) was weighed (immediately after preparation) into a glass insert inside a nitrogen filled glove box. An anhydrous liquid non-solvent or solid diluent (dried by heating under N₂ to remove water) was added to act as a heat transfer medium. The insert was sealed, removed from the box and placed under 580 kPa ethylene pressure. It was shaken for 18 h. The resulting polymer was isolated by filtration (for the liquid diluents), flotation (Teflon® 9B polytetrafluoroethylene, available from E. I. du Font de Nemours & Company, Wilmington, DE, U.S.A.), dissolution of the diluent (MgCl₂) in water, or Soxhlet extraction of the soluble polymer with chlorobenzene. The polymerization results are outlined in Table 5.

**Table 5**

| **Ex. No.** | **Diluent** | **Yield (g PE)** | **TO** |
|---|---|---|---|
| 59-1 | Anhyd. pentane, 5ml | 8.31 | 51258 |
| 59-2 | Anhyd. cyclohexane, 5ml | 8.15 | 50271 |
| 59-3 | No diluent | 10.4 | 64150 |
| 59-4 | Teflon® powder (DuPont), 3.78g | 10.85 | 66925 |
| 59-5 | α-Alumina (ALCOA, A16-S60), 3.01g | 9.76 | 60202 |
| 59-6 | Silylated SiO₂*, 2.50g | 5.18 | 31951 |
| 59-7 | Sand (Fisher Scientific S150-3), 7,64g | 8.14 | 50209 |
| 59-8 | Anhydrous MgCl₂, 3.00g | 5.36 | 33062 |

| | | | |
|---|---|---|---|
| * SiO₂, PQ Corp. (MS1340), silylated with trimethylchlorosilane. | | | |

### Example 60

Inside a nitrogen filled drybox, silica-supported MAO (from Akzo Nobel, 13.4 wt% Al on the silica, 0.773 g) was added to the complex [(α-diimine)NiBr₂] (0.048 g), wherein the α-diimine is **H**, in 10 ml dry toluene. The mixture was shaken for 20 min after which it was filtered, and washed repeatedly with toluene until the washings were colorless. The final product was dried under vacuum for 15 min and then stored in the drybox at -30°C.

On the same day, 0.096 g of the supported catalyst was placed in 50 ml dry cyclohexane in a 100 ml Parr® reactor. The suspension was stirred under ethylene (1.17 MPa) for 43 min during which the temperature increased from 30°C to 45°C. The reaction was terminated by addition of MeOH and the polymer product filtered, washed with MeOH and dried. Yield = 9.11 g polyethylene beads. No reactor fouling was observed.

After storage of the catalyst at -30°C for 10 days the above reaction was repeated. Yield = 14.32 g polyethylene beads. No reactor fouling was observed.

### Examples 61-65

### Preparation of Supported Co-catalyst

Inside a drybox under nitrogen, Grace-Davison XPO-2402 silica (spray-dried 948 silica dehydrated to ∼1mmol OH/g) was slurried in anhydrous solvent and the cocatalyst added. The resulting mixture was agitated by shaking for a specified reaction time. The solid supported cocatalyst was then filtered, washed several times with the same solvent and finally with pentane and dried under vacuum. Al content was measured using ICP analysis. See Table 6 for details of the supported cocatalysts. Elemental mapping by Scanning Electron Microscopy indicated that in the cocatalysts in Table 6 the aluminum was evenly distributed throughout the silica particles.

**Table 6**

| **Ex. No.** | **Cocatalyst (ml)** | **Mass silica** | **Solvent** | **Reaction Time (h)** | **%Al (ICP)** |
|---|---|---|---|---|---|
| 61 | AlEt₃ (10 ml) (1M in hexane) | 5.0 g | pentane | 2 | 3.0 |
| 62 | AlMe₃ (0.55ml) | 2.95 g | toluene | 18 | 3.6 |
| 63 | AlEt₂Cl (2.25 ml) (2M in toluene) | 2.25 g | toluene | 18 | 2.7 |
| 64 | AlEtCl₂ (5 ml) (1M in hexane) | 2.36 g | toluene | 18 | 3.1 |
| 65 | Al₂Et₃Cl₃ (6.0 ml) (0.91M in toluene) | 3.0 g | toluene | 5 | 2.8 |

### Examples 66-71

### Supported Catalyst Preparation

Inside a drybox under a nitrogen atmosphere the each supported cocatalyst from Examples 61-65 was weighed into an individual glass vial and a solution of the nickel compound 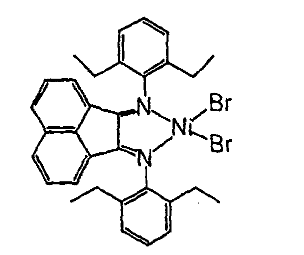 in anhydrous toluene was added. The resulting mixture was agitated by shaking for 60 min. The solid supported catalyst was filtered, washed several times with toluene and finally with pentane and dried under vacuum. Al and Ni content was measured using ICP analysis. Results are shown in Table 7.

**Table 7**

| **Ex. No.** | **Cocatalyst from Ex.** ^{**a**} | **Mass support** | **mmol Ni added** | **Time (min)** | **%Al (ICP)** | **%Ni (ICP)** |
|---|---|---|---|---|---|---|
| 66 | | 1.0g | 0.05 | 40 | 12.8 | 0.30 |
| 67 | 61 | 1.0g | 0.012^{b} | 60 | 2.94 | 0.08 |
| 68 | 62 | 0.5g | 0.06 ^{b} | 60 | 3.33 | 0.15 |
| 69 | 63 | 0.5g | 0.01 | 60 | 2.90 | 0.12 |
| 70 | 64 | 1.0g | 0.023 ^{b} | 60 | 2.74 | 0.092 |
| 71 | 65 | 0.5g | 0.011 | 60 | 2.20 | 0.10 |

| | | | | | | |
|---|---|---|---|---|---|---|
| ^{a} Commercially produced by Grace Davison using MAO. | | | | | | |
| ^{b} Some color remained in solution after filtration and washing. | | | | | | |

### Examples 72-77

### Slurry Ethylene Polymerizations

Inside a drybox under nitrogen, the supported catalyst of Examples 71-76 were slurried in 5 ml anhydrous cyclohexane and drawn into a syringe. The needle tip was sealed and the syringe removed from the drybox. A 100 ml Parr® stirred reactor was dried at 150°C under vacuum and, when cool, the slurry solvent (50 ml anhydrous 2,2,4-trimethylpentane) was charged. The reactor was purged with dry nitrogen and the catalyst added through an addition port. The port was closed, stirring started and the reactor brought to 50-52°C. Ethylene (1.0 MPa) was admitted from a high pressure reservoir and the polymerization reaction was run for 30 min at 55°C. The ethylene was then vented and the reaction quenched by addition of methanol. The product was filtered, washed well with a methanol / 10% HCl solution, then methanol and finally acetone and dried under vacuum at 60°C. Results are shown in Table 8.

**Table 8a**

| **Ex. No.** | **Catalyst from Ex. No.** | **Al:Ni (mol)** | **µmol Ni** | **TO# (x10**^{**-3**}**) mol/mol Ni** | **Tm (°C)** | **ΔH (J/g)** | **Branching Me/1000 CH**_{**2**} |
|---|---|---|---|---|---|---|---|
| 72 | 66 | 93:1 | 4 | 90.9 | 119.3 | 115 | 18.6 |
| 73 | 67 | 75:1 | 5 | 5.9 | 119.8 | 68 | 21.3 |
| 74 | 68 | 48:1 | 2.5 | 26.5 | 121.0 | 119 | 20 |
| 75 | 69 | 50:1 | 4 | 141.1^{b} | 115.4 | 101 | 25.4 |
| 76 | 70 | 65:1 | 2.5 | 79.0^{c} | 112.9 | 81 | 31 |
| 77 | 71 | 48:1 | 3 | 44.0^{c} | 111.4 | 82 | 42.1 |

| | | | | | | | |
|---|---|---|---|---|---|---|---|
| ^{a} Al:Ni ratio determined by ICP analysis TO# = mol ethylene consumed / mol nickel Tm = melting point (determined by DSC) Branching determined by 1H NMR (120°C, TCE) ^{b} GC analysis of the off gas revealed the presence of significant quantities of *t*-2,butene | | | | | | | |
| ^{c} Large ethylene uptake relative to polymer yield indicates that butenes were produced | | | | | | | |

## Claims

1. A catalyst for the polymerization of olefins made by a process, comprising,
(a) contacting, at a temperature of -100°C to +200°C:
a first compound W, which is a neutral Lewis acid capable of abstracting either Q⁻ or S⁻ to form WQ⁻ or WS⁻, provided that the anion formed is a weakly coordinating anion; or a cationic Lewis or Bronsted acid whose counterion is a weakly coordinating anion;
a second compound of the formula 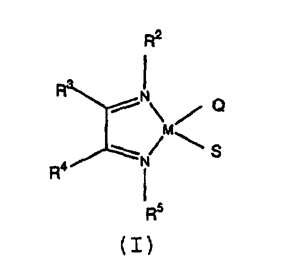 and a first polymerizable olefin wherein:
M is Ni or Pd;
R² and R⁵ are each independently hydrocarbyl or substituted hydrocarbyl, provided that the carbon atom bound to the imino nitrogen atom has at least two carbon atoms bound to it;
R³ and R⁴ are each independently hydrogen, hydrocarbyl, substituted hydrocarbyl, or R³ and R⁴ taken together are hydrocarbylene or substituted hydrocarbylene to form a ring;
Q is alkyl, hydride, chloride, iodide, or bromide; and
S is alkyl, hydride, chloride, iodide, or bromide; and
(b) isolating a polymer formed in (a) without exposing said polymer to a substance or condition which would deactivate active polymerization sites present in or on said polymer.

2. The catalyst as recited in claim 1 wherein said first polymerizable olefin is ethylene.

3. The catalyst as recited in claim 1 wherein said first polymerizable olefin is cyclopentene.

4. The catalyst as recited in any one of claims 1-3 wherein M is nickel.

5. A process for the polymerization of olefins, comprising the step of contacting the catalyst of any one of claims 1-3 with a second polymerizable olefin at a temperature of -100°C to +200°C.

6. The process as recited in claim 5 wherein M is nickel.

7. The process as recited in claim 5 wherein said second polymerizable olefin is ethylene.

8. The process as recited in claim 6 wherein said second polymerizable olefin is ethylene.

## Patentansprüche

1. Katalysator für die Polymerisation von Olefinen, hergestellt nach einem Verfahren, umfassend:
(a) Kontaktieren bei einer Temperatur von -100°C bis +200°C:
einer ersten Verbindung W, die eine neutrale Lewis-Säure ist, die entweder Q⁻ oder S⁻ abspalten kann, um WQ⁻ oder WS⁻ zu bilden unter der Voraussetzung, dass das gebildete Anionen ein schwach koordinierendes Anion ist; oder eine kationische Lewis-oder Brönsted-Säure, deren Gegenion ein schwach koordinierendes Anion ist;
einer zweiten Verbindung der Formel: 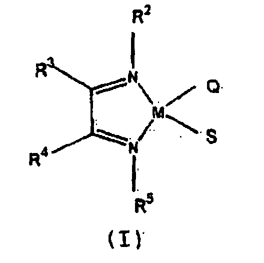
und eines ersten polymerisierbaren Olefins, in welcher Formel ist:
M Ni oder Pd;
R² und R⁵ jeweils unabhängig Hydrocarbyl oder substituiertes Hydrocarbyl unter der Voraussetzung, dass das an dem Imino-Stickstoff gebundene Kohlenstoffatom mindestens zwei an ihm gebundene Kohlenstoffatome aufweist;
R³ und R⁴ jeweils unabhängig Wasserstoff, Hydrocarbyl oder substituiertes Hydrocarbyl, oder R³ und R⁴ sind zusammengenommen Hydrocarbylen oder substituiertes Hydrocarbylen, um einen Ring zu bilden;
Q Alkyl, Hydrid, Chlorid, Iodid oder Bromid; und
S Alkyl, Hydrid, Chlorid, Iodid oder Bromid;
sowie
(b) Isolieren eines unter (a) gebildeten Polymers, ohne das Polymer an einer Substanz oder Bedingung zu exponieren, welche die in oder an dem Polymer vorhandenen aktiven Polymerisationsstellen deaktivieren würden.

2. Katalysator nach Anspruch 1, bei welchem das erste polymerisierbare Olefin Ethylen ist.

3. Katalysator nach Anspruch 1, bei welchem das erste polymerisierbare Olefin Cyclopenten ist.

4. Katalysator nach einem der vorgenannten Ansprüche 1 bis 3, bei welchem M Nickel ist.

5. Verfahren zur Polymerisation von Olefinen, umfassend die Schritte des Kontaktierens des Katalysators nach einem der vorgenannten Ansprüche 1 bis 3 mit einem zweiten polymerisierbaren Olefin bei einer Temperatur von -100°C bis +200°C.

6. Verfahren nach Anspruch 5, bei welchem M Nickel ist.

7. Katalysator nach Anspruch 5, bei welchem das erste polymerisierbare Olefin Ethylen ist.

8. Katalysator nach Anspruch 6, bei welchem das erste polymerisierbare Olefin Ethylen ist.

## Revendications

1. Catalyseur pour la polymérisation d'oléfines préparé par un procédé comportant:
(a) la mise en contact, à une température de -100°C à +200°C:
d'un premier composé W, qui est un acide de Lewis neutre capable de soustraire soit Q⁻ soit S⁻ pour former WQ⁻ ou WS⁻, à condition que l'anion formé soit un anion faiblement coordinant; ou un acide de Lewis ou de Brönsted cationique dont le contre-ion est un anion faiblement coordinant;
d'un second composé de formule 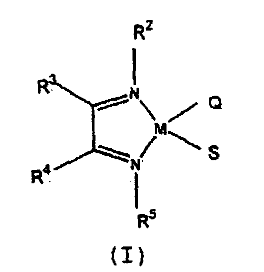 et d'une première oléfine polymérisable dans laquelle:
M est Ni ou Pd;
R² et R⁵ sont chacun indépendamment un hydrocarbyle ou un hydrocarbyle substitué, à condition que l'atome de carbone lié à l'atome d'azote de l'imino ait au moins deux atomes de carbone qui lui sont liés;
R³ et R⁴ sont chacun indépendamment un hydrogène, un hydrocarbyle, un hydrocarbyle substitué, ou R³ et R⁴ pris ensemble sont un hydrocarbylène ou un hydrocarbylène substitué pour former un cycle;
Q est un alkyle, un hydrure, un chlorure, un iodure, ou un bromure; et
S est un alkyle, un hydrure, un chlorure, un iodure, ou un bromure; et
(b) l'isolement d'un polymère formé en (a) sans exposer ledit polymère à une substance ou condition qui pourrait désactiver les sites de polymérisation actifs présents dans ou sur ledit polymère.

2. Catalyseur selon la revendication 1 dans lequel ladite première oléfine polymérisable est l'éthylène.

3. Catalyseur selon la revendication 1 dans lequel ladite première oléfine polymérisable est le cyclopentène.

4. Catalyseur selon l'une quelconque des revendications 1 à 3 dans lequel M est du nickel.

5. Procédé pour la polymérisation d'oléfines, comportant l'étape de mise en contact du catalyseur de l'une quelconque des revendications 1 à 3 avec une seconde oléfine polymérisable, à une température de -100°C à +200°C.

6. Procédé selon la revendication 5 dans lequel M est du nickel.

7. Procédé selon la revendication 5 dans lequel ladite seconde oléfine polymérisable est l'éthylène.

8. Procédé selon la revendication 6 dans lequel ladite seconde oléfine polymérisable est l'éthylène.
